(19) **Europäisches Patentamt European Patent Office Office européen des brevets**

(11) **EP 4 417 643 A1**

(12) # EUROPEAN PATENT APPLICATION
published in accordance with Art. 153(4) EPC

(43) Date of publication:
**21.08.2024 Bulletin 2024/34**

(21) Application number: **22880953.9**

(22) Date of filing: **07.10.2022**

(51) International Patent Classification (IPC):
**C08J 9/16** (2006.01) **C08F 110/06** (2006.01)

(52) Cooperative Patent Classification (CPC):
**C08F 110/06; C08J 9/16**

(86) International application number:
**PCT/JP2022/037641**

(87) International publication number:
**WO 2023/063258 (20.04.2023 Gazette 2023/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.10.2021 JP 2021168308**

(71) Applicant: **JSP Corporation Tokyo 100-0005 (JP)**

(72) Inventors:
- **SAITO, Yukiya Kanuma-shi, Tochigi 322-0014 (JP)**
- **OHTA, Hajime Kanuma-shi, Tochigi 322-0014 (JP)**

(74) Representative: **Gille Hrabal Partnerschaftsgesellschaft mbB Patentanwälte Brucknerstraße 20 40593 Düsseldorf (DE)**

(54) **POLYPROPYLENE RESIN FOAM PARTICLES**

(57) A polypropylene-based resin expanded bead, in which the melting point $Tm_a$ of a polypropylene-based resin (a) constituting a core layer in an expanded state is 135°C or higher and 155°C or lower; a polypropylene-based resin (b) constituting a covering layer contains a propylene-based copolymer containing a propylene component, an ethylene component, and a butene component, as a main component; the difference $[Tm_a - Tm_b]$ between the melting point $Tm_a$ of the polypropylene-based resin (a) and the melting point $Tm_b$ of the polypropylene-based resin (b) is 1°C or more and 30°C or less; the difference $[Tm_b - Tc_b]$ between the melting point $Tm_b$ of the polypropylene-based resin (b) and the crystallization temperature $Tc_b$ of the polypropylene-based resin (b) is 40°C or less; and the covering layer contains a higher fatty acid amide.

[Fig. 1]

EP 4 417 643 A1

**Description**

TECHNICAL FIELD

The present invention relates to a polypropylene-based resin expanded bead.

BACKGROUND ART

Expanded beads molded articles obtained by the in-mold molding of polypropylene-based resin expanded beads are excellent in chemical resistance, impact resistance, recovery properties from compressive set, and other properties, and therefore, they are utilized as impact absorbers, heat insulating materials, various packaging materials, and the like in a wide range of fields such as food transportation containers, packaging or cushioning materials for electric and electronic parts, vehicle members such as automobile bumpers, building members such as residential heat insulating materials, and sundries.

Polypropylene-based resin expanded beads molded articles are produced by the in-mold molding method which involves, for example, filling polypropylene-based resin expanded beads into a mold for molding, and heating the mold with a heating medium such as steam such that the expanded beads are secondarily expanded while they are fusion bonded to each other so as to mold the expanded beads into the desired shape.

In addition, in order to increase the fusion bonding properties between the expanded beads at the time of in-mold molding and to improve the in-mold moldability at a relatively low molding pressure, as the polypropylene-based resin expanded beads, for example, an expanded bead with a multilayer structure containing an expanded core layer having a polypropylene-based resin as the base material resin and a covering layer in which the expanded core layer is covered with a resin having a melting point lower than that of the polypropylene-based resin constituting the expanded core layer may be used (see, for example, PTL1).

CITATION LIST

PATENT LITERATURE

PTL1: JP 2011-16914 A

SUMMARY OF INVENTION

TECHNICAL PROBLEM

In the polypropylene-based resin expanded bead containing a covering layer as described in PTL1, a propylene-based copolymer containing a propylene component, an ethylene component, and a butene component may be used as the resin constituting the covering layer. In the case where such a propylene-based copolymer is used, although it is possible to obtain a molded article with good mechanical properties while enhancing the fusion bonding properties between the expanded beads at the time of in-mold molding, when multiple cycles of in-mold molding are carried out, for example, deposits derived from the expanded beads easily accumulate in the locations of the mold for molding that are easily heated. In particular, when in-mold molding is performed using a mold for molding having a complex shape in which the thickness varies depending on molding sites, the accumulation of deposits as described above tended to occur more easily. The accumulation of deposits in the mold for molding may adversely affect the surface properties of the expanded beads molded article that has been in-mold molded, and therefore, the productivity in long-term production of the expanded beads molded article may be reduced.

Therefore, an object of the present invention is to provide a polypropylene-based resin expanded bead that has a wide moldable range in in-mold molding and also suppresses the accumulation of deposits on a mold for molding even in the case where an expanded beads molded article is produced for a long period of time.

SOLUTION TO PROBLEM

The present inventors have found that the object can be attained by adopting a configuration given below, reaching the completion of the present invention.

Specifically, the present invention is as follows.

> <1> A polypropylene-based resin expanded bead having: a core layer in an expanded state containing a polypropylene-based resin (a) as a base material resin; and a covering layer containing a polypropylene-based resin (b) as a base material resin, the covering layer covering the core layer, wherein the polypropylene-based resin (a) has a melting point $Tm_a$ of 135°C or higher and 155°C or lower, the polypropylene-based resin (b) contains a propylene-based copolymer containing a propylene component, an ethylene component, and a butene component, as a main component, a difference $[Tm_a - Tm_b]$ between the melting point $Tm_a$ of the polypropylene-based resin (a) and a melting point $Tm_b$ of the polypropylene-based resin (b) is 1°C or more and 30°C or less, a difference $[Tm_b - Tc_b]$ between the melting point $Tm_b$ of the polypropylene-based resin (b) and a crystallization temperature $Tc_b$ of the polypropylene-based resin (b) is 40°C or less, and the covering layer contains a higher fatty acid amide.

<2> The polypropylene-based resin expanded bead according to <1>, wherein the crystallization temperature $Tc_b$ of the polypropylene-based resin (b) is 95°C or higher and 110°C or lower.

<3> The polypropylene-based resin expanded bead according to <1> or <2>, wherein a content of the higher fatty acid amide in the covering layer is 0.02% by mass or more and 2% by mass or less.

<4> The polypropylene-based resin expanded bead according to <1> or <2>, wherein a content of the higher fatty acid amide in the covering layer is 0.2% by mass or more and 2% by mass or less.

<5> The polypropylene-based resin expanded bead according to any one of <1> to <4>, wherein the higher fatty acid amide contains erucic acid amide.

<6> The polypropylene-based resin expanded bead according to any one of <1> to <5>, wherein a difference $[Tc_a - Tc_b]$ between a crystallization temperature $Tc_a$ of the polypropylene-based resin (a) and the crystallization temperature $Tc_b$ of the polypropylene-based resin (b) is -10°C or more and 3°C or less.

ADVANTAGEOUS EFFECT OF INVENTION

The present invention can provide a polypropylene-based resin expanded bead that has a wide moldable range in in-mold molding and also suppresses the accumulation of deposits on a mold for molding even in the case where an expanded beads molded article is produced for a long period of time.

BRIEF DESCRIPTION OF DRAWINGS

[Fig. 1] Fig. 1 illustrates the DSC curve of a polypropylene-based resin at the time of the second heating.
[Fig. 2] Fig. 2 illustrates the DSC curve of an expanded bead at the time of the first heating.

DESCRIPTION OF EMBODIMENTS

[Polypropylene-based resin expanded bead]

The polypropylene-based resin expanded bead of the present invention (hereinafter, also simply referred to as the expanded bead) has: a core layer in an expanded state containing a polypropylene-based resin (a) as the base material resin; and a covering layer containing a polypropylene-based resin (b) as the base material resin, the covering layer covering the core layer, wherein the polypropylene-based resin (a) has a melting point $Tm_a$ of 135°C or higher and 155°C or lower, the polypropylene-based resin (b) contains a propylene-based copolymer containing a propylene component, an ethylene component, and a butene component, as a main component, the difference $[Tm_a - Tm_b]$ between the melting point $Tm_a$ of the polypropylene-based resin (a) and the melting point $Tm_b$ of the polypropylene-based resin (b) is 1°C or more and 30°C or less, the difference $[Tm_b - Tc_b]$ between the melting point $Tm_b$ of the polypropylene-based resin (b) and the crystallization temperature $Tc_b$ of the polypropylene-based resin (b) is 40°C or less, and the covering layer contains a higher fatty acid amide. Note that the polypropylene-based resin used herein refers to a polymer having a propylene-derived constituent unit content of 50% by mass or more. Also, a numerical value range represented using "to" herein means a range that includes the numerical values described before and after "to" as the lower limit value and the upper limit value.

Conventionally, as for an expanded bead provided with a covering layer containing a propylene-based copolymer containing a propylene component, an ethylene component, and a butene component as the base material resin, the resin derived from the covering layer of the expanded bead was easily deposited on a mold for molding during in-mold molding, and these deposits were easily accumulated on the mold for molding. In particular, in the case where a mold for molding having a complex shape in which the thickness varies depending on molding sites is used, the deposits tended to be accumulated more easily on the mold for molding in the locations that are easily heated in parts, such as thin-walled sections. Note that the deposits accumulated on the mold for molding can be removed by removal operations such as cleaning the mold for molding. However, the higher frequency of such removal operations is unfavorable since it reduces productivity in the long-term production of the expanded beads molded article.

In the polypropylene-based resin expanded bead of the present invention, when the difference [$Tm_b - Tc_b$] between the melting point $Tm_b$ of the polypropylene-based resin (b) and the crystallization temperature $Tc_b$ of the polypropylene-based resin (b) is equal to or less than the value described above and the difference between the melting point $Tm_b$ and the crystallization temperature $Tc_b$ of the polypropylene-based resin (b) constituting the covering layer is relatively small, the resin constituting the covering layer is less likely to be deposited on the mold for molding at the time of in-mold molding. Although the reason for this is not clear, if the difference between the melting point $Tm_b$ and the crystallization temperature $Tc_b$ of the polypropylene-based resin (b) is equal to or less than the value described above, when polypropylene-based resin expanded beads filled into a mold for molding are heated to fusion bond the expanded beads, thereby in-mold molding a polypropylene-based resin expanded beads molded article (hereinafter, also referred to as the expanded beads molded article or the molded article), it is presumed that, during the period between the completion of heating for molding and the removal of the molded article from the mold for molding, solidification of the polypropylene-based resin (b) associated with the progress of cooling of the molded article is more likely to proceed, and the resin is less likely to be deposited on the mold for molding. In addition to the above, it is also presumed that, since the covering layer contains a higher fatty acid amide in the polypropylene-based resin expanded bead of the present invention, deposition of the resin constituting the covering layer on the mold for molding can be suppressed.

<Core layer>

The core layer in an expanded state of the polypropylene-based resin expanded bead contains a polypropylene-based resin (a) as the base material resin. For example, propylene-based copolymers can be used as the polypropylene-based resin (a). Examples of the propylene-based copolymers include copolymers of propylene and ethylene or an $\alpha$-olefin having 4 or more carbon atoms, such as an ethylene-propylene copolymer, a propylene-butene copolymer, and an ethylene-propylene-butene copolymer, a propylene-acrylic acid copolymer, and a propylene-maleic anhydride copolymer. These copolymers may be any of block copolymers, random copolymers, and graft copolymers, but they are preferably random copolymers. In addition, the content of the component derived from ethylene and/or the component derived from an $\alpha$-olefin having 4 or more carbon atoms contained in the propylene-based copolymer as a copolymerization component is preferably 1 to 15% by mass, more preferably 2 to 12% by mass, and still more preferably 2 to 5% by mass. Note that the polypropylene-based resin (a) may be a mixture of two or more polypropylene-based resins.

From the viewpoint of easily obtaining an expanded bead that is excellent in the balance between in-mold moldability and the physical properties of the resulting molded article, the polypropylene-based resin (a) is preferably a polypropylene-based resin that contains an ethylene-propylene copolymer and/or an ethylene-propylene-butene copolymer as a main component and is more preferably a polypropylene-based resin that contains an ethylene-propylene copolymer as a main component. In this case, the content proportion of the ethylene-propylene copolymer and/or ethylene-propylene-butene copolymer in the polypropylene-based resin (a) is preferably 50% by mass or more, more preferably 60% by mass or more, and still more preferably 80% by mass or more. Also, in the case where the polypropylene-based resin (a) contains an ethylene-propylene copolymer as a main component, the content proportion of the ethylene-propylene copolymer in the polypropylene-based resin (a) is preferably 50% by mass or more, more preferably 60% by mass or more, and still more preferably 80% by mass or more.

(Polypropylene-based resin (a))

«Melting point $Tm_a$»

The melting point $Tm_a$ of the polypropylene-based resin (a) is 135°C or higher, preferably 136°C or higher, from the viewpoint of enhancing the rigidity, heat resistance, and other properties of the expanded beads molded article obtained by in-mold molding the expanded beads. Also, the melting point $Tm_a$ of the polypropylene-based resin (a) is 155°C or lower, preferably 150°C or lower, more preferably 148°C or lower, and still more preferably 146°C or lower, from the viewpoint of enhancing the in-mold moldability of the expanded bead at a relatively low molding pressure. That is, the melting point $Tm_a$ of the polypropylene-based resin (a) is 135°C to 155°C, preferably 136°C to 150°C, more preferably 136°C to 148°C, and still more preferably 136°C to 146°C.

The melting point $Tm_a$ of the polypropylene-based resin (a) is determined as follows. In accordance with JIS K 7121: 1987, as the conditioning of a test piece, "(2) The case of measuring the melting temperature after carrying out a certain heat treatment" in "3. Conditioning of a test piece" is adopted. The test piece is heated from 30°C to 200°C at a heating rate of 10°C/min, and after reaching 200°C, the temperature is lowered from 200°C to 30°C at a rate of 10°C/min and then heated again for a second time from 30°C to 200°C at a rate of 10°C/min to acquire the DSC curve (DSC curve at the time of second heating), and the peak top temperature of the melting peak associated with the melting of the resin on the DSC curve at the time of second heating is defined as the melting point $Tm_a$ of the polypropylene-based resin (a). Note that, in the case where multiple melting peaks appear in the DSC curve, the peak top temperature of the melting peak having the largest area is adopted as the melting point $Tm_a$ of the polypropylene-based resin (a), as in the measurement of the melting point $Tm_b$ of the polypropylene-based resin (b), which will be described later.

«Total heat of fusion $\Delta h_a$»

The total heat of fusion $\Delta h_a$ of the polypropylene-based resin (a) is preferably 50 J/g or more, more preferably 60 J/g or more, and still more preferably 65 J/g or more, from the viewpoint of enhancing the mechanical properties of the resulting molded article. Also, the total heat of fusion $\Delta h_a$ of the polypropylene-based resin (a) is preferably 120 J/g or less, more preferably 100 J/g or less, and still more preferably 80 J/g or less, from the viewpoint of enhancing the in-mold moldability of the expanded bead. That is, the total heat of fusion $\Delta h_a$ of the polypropylene-based resin (a) is preferably 50 to 120 J/g, more preferably 60 to 100 J/g, and still more preferably 65 to 80 J/g.

The total heat of fusion $\Delta h_a$ of the polypropylene-based resin (a) can be determined from the DSC curve obtained by carrying out differential scanning calorimetry (DSC) on the polypropylene-based resin (a) in accordance with JIS K 7122: 1987. Specifically, at first, the DSC curve of the polypropylene-based resin (a) at the time of second heating is obtained in the same manner as the measurement of the melting point described above. The point at a temperature of 80°C on the obtained DSC curve at the time of second heating is defined as $\alpha$, and the point on the DSC curve corresponding to the end temperature of melting is defined as $\beta$. The area of the part surrounded by the DSC curve at an interval between the point $\alpha$ and the point $\beta$ and the line segment ($\alpha$-$\beta$) is measured, which is defined as the total heat of fusion $\Delta h_a$ of the polypropylene-based resin (a).

«Crystallization temperature $Tc_a$»

The crystallization temperature $Tc_a$ of the polypropylene-based resin (a) is not particularly limited as long as it is in the range where the desired object of the present invention can be achieved, but it is generally 80°C or higher, more preferably 90°C or higher. Also, the crystallization temperature $Tc_a$ of the polypropylene-based resin (a) is generally 120°C or lower, more preferably 115°C or lower, and still more preferably 110°C or lower. That is, the crystallization temperature $Tc_a$ of the polypropylene-based resin (a) is preferably 80°C to 120°C, more preferably 90°C to 115°C, and still more preferably 90°C to 110°C.

The crystallization temperature $Tc_a$ of the polypropylene-based resin (a) is measured using a heat flux differential scanning calorimeter in accordance with JIS K 7121:1987. Note that, in the case where multiple crystallization peaks appear in the DSC curve, the peak temperature of the crystallization peak having the largest area is defined as the crystallization temperature. Also, the cooling rate when measuring the crystallization temperature is set to 10°C per minute.

«Flexural modulus»

The flexural modulus of the polypropylene-based resin (a) is preferably 800 MPa or more, more preferably 900 MPa or more, from the viewpoint of achieving both mechanical strength and moldability of the expanded beads molded article. Also, from the same viewpoint, the flexural modulus of the polypropylene-based resin (a) is preferably 1500 MPa or less, more preferably 1300 MPa or less, and still more preferably 1200 MPa or less. That is, the flexural modulus of the polypropylene-based resin (a) is preferably 800 to 1500 MPa, more preferably 800 to 1300 MPa, and still more preferably 800 to 1200 MPa.

The flexural modulus of the polypropylene-based resin (a) can be determined in accordance with JIS K 7171:2016.

The polypropylene-based resin (a) may contain other polymers such as resins or elastomers other than propylene-based resins to the extent that the object and advantageous effects of the present invention are not inhibited. In that case, the content of the other polymers in the polypropylene-based resin (a) is preferably 20% by mass or less, more preferably 10% by mass or less, still more preferably 5% by mass or less, and even more preferably 3% by mass or less, based on 100% by mass of the polypropylene-based resin (a). Also, it is particularly preferable that the content of the other polymers in the polypropylene-based resin (a) is 0% by mass, that is, the polypropylene-based resin (a) consists solely of a polypropylene-based resin as a polymer.

To the core layer, an additive may be added, if necessary, such as a cell adjusting agent, a flame retardant, a flame retardant synergist, a cell nucleating agent, an antistatic agent, an antioxidant, a UV absorbing agent, a light stabilizer, a conductive material, and a coloring agent.

Preferably, the core layer should contain carbon black. In this case, the expanded bead is colored to be black. From the viewpoint of being able to impart a good black color to the molded article while maintaining the moldability of the expanded bead, the content of the carbon black in the expanded core layer is preferably 0.5% by mass or more and 5% by mass or less, more preferably 1% by mass or more and 4% by mass or less, and still more preferably 2% by mass or more and 3% by mass or less.

For example, channel black, roller black, furnace black, thermal black, acetylene black, and the like can be used as the carbon black. Among the above, furnace black is preferred as the carbon black used for the expanded bead since it is excellent in the balance between dispersibility in the polypropylene-based resin and the material cost.

<Covering layer>

The covering layer of the polypropylene-based resin expanded bead covers the core layer in an expanded state. The covering layer may cover a portion of the core layer in an expanded state, or it may completely cover the entire outer surface of the core layer in an expanded state. Specifically, the covering layer preferably covers 50% or more of the core layer, more preferably covers 70% or more thereof, and still more preferably covers 80% or more thereof.

Although the covering layer may be either in an expanded state or a non-expanded state to the extent that the desired object of the present invention can be achieved, it is preferable that the covering layer is substantially in a non-expanded state from the viewpoint that the appearance of the molded article is likely to be good. Note that the non-expanded state means that the covering layer has no cell structure.

(Polypropylene-based resin (b))

The covering layer in the polypropylene-based resin expanded bead has a polypropylene-based resin (b) as the base material resin. The polypropylene-based resin (b) contains a propylene-based copolymer containing a propylene component, an ethylene component, and a butene component, as a main component.

Specifically, the content proportion of the propylene-based copolymer containing a propylene component, an ethylene component, and a butene component in the polypropylene-based resin (b) is 50% by mass or more, preferably 60% by mass or more, more preferably 80% by mass or more, and still more preferably 90% by mass or more.

Note that the polypropylene-based resin (b) may be a mixture of two or more ethylene-propylene-butene copolymers, or it may be a mixture of an ethylene-propylene-butene copolymer and a propylene-based resin other than the ethylene-propylene-butene copolymer. Also, it is more preferable to use an ethylene-propylene-butene random copolymer as the propylene-based copolymer containing a propylene component, an ethylene component, and a butene component.

The polypropylene-based resin (b), which is composed mainly of the propylene-based copolymer containing a propylene component, an ethylene component, and a butene component, tends to be excellent in mechanical strength such as flexural modulus while having a relatively low melting point. Therefore, by using the polypropylene-based resin (b) as the base material resin of the covering layer, it is possible to obtain an expanded beads molded article that is excellent in mechanical strength while being excellent in fusion bonding properties at the time of in-mold molding.

From the viewpoint of easily expressing the desired physical properties in a stable manner, it is preferable that the content of the ethylene component in the propylene-based copolymer containing a propylene component, an ethylene component, and a butene component is 2% by mass or more and 5% by mass or less. In addition, the content of the butene component in the propylene-based copolymer containing a propylene component, an ethylene component, and a butene component is preferably 3% by mass or more and 10% by mass or less, more preferably 4% by mass or more and 6% by mass or less. Note that the above contents are the contents when the total of the propylene component, the ethylene component, and the butene component is set to 100% by mass. Also, the content of a component derived from each monomer in the copolymer can be determined by IR spectral measurement or the like, which will be described in Examples.

In addition, from the same viewpoint, the ratio of the content of the butene component to the content of the ethylene component [butene component content/ethylene component content] in the propylene-based copolymer containing a propylene component, an ethylene component, and a butene component is preferably 0.5 or more and 4 or less, more preferably 0.8 or more and 3 or less, and still more preferably 1 or more and 2 or less.

<<Difference [$Tm_a$ - $Tm_b$] between melting point $Tm_a$ and melting point $Tm_b$>>

The difference [$Tm_a$ - $Tm_b$] between the melting point $Tm_a$ of the polypropylene-based resin (a) and the melting point $Tm_b$ of the polypropylene-based resin (b) is 1°C or more, preferably 2°C or more, more preferably 5°C or more, still more preferably 10°C or more, and particularly preferably 15°C or more, from the viewpoint of enhancing the fusion bonding properties between the expanded beads and the in-mold moldability under the conditions of a low molding pressure. Also, the above difference [$Tm_a$ - $Tm_b$] is 30°C or less, preferably 27°C or less, and more preferably 25°C or less, from the viewpoint of suppressing deposition of the covering layer on the mold for molding. That is, the above difference [$Tm_a$ - $Tm_b$] is 1°C to 30°C, preferably 2°C to 27°C, more preferably 5°C to 27°C, still more preferably 10°C to 25°C, and even more preferably 15°C to 25°C.

«Melting point Tm_b>>

Although the melting point $Tm_b$ of the polypropylene-based resin (b) is not particularly limited as long as the difference $[Tm_a - Tm_b]$ from the melting point $Tm_a$ of the polypropylene-based resin (a) is in the above range, it is 105°C or higher, preferably 110°C or higher, more preferably 115°C or higher, and still more preferably 120°C or higher. Also, the melting point $Tm_b$ of the polypropylene-based resin (b) is preferably 145°C or lower, more preferably 140°C or lower, still more preferably 130°C or lower, and even more preferably 128°C or lower. That is, the melting point $Tm_b$ of the polypropylene-based resin (b) is preferably 105°C to 145°C, more preferably 110°C to 140°C, still more preferably 115°C to 130°C, and even more preferably 120°C to 128°C.

The melting point $Tm_b$ of the polypropylene-based resin (b) is determined as follows. In accordance with JIS K 7121:1987, as the conditioning of a test piece, "(2) The case of measuring the melting temperature after carrying out a certain heat treatment" in "3. Conditioning of a test piece" is adopted. The test piece is heated from 30°C to 200°C at a heating rate of 10°C/min, and after reaching 200°C, the temperature is lowered from 200°C to 30°C at a rate of 10°C/min and then heated again for a second time from 30°C to 200°C at a rate of 10°C/min to acquire the DSC curve (DSC curve at the time of second heating), and the peak top temperature of the melting peak associated with the melting of the resin on the DSC curve at the time of second heating is defined as the melting point $Tm_b$ of the polypropylene-based resin (b). Note that, in the case where multiple melting peaks appear in the DSC curve, the peak top temperature of the melting peak having the largest area is adopted as the melting point $Tm_b$ of the polypropylene-based resin (b). At this time, by distinguishing each melting peak by the valley temperature of the DSC curve located between the peak top temperatures of their respective melting peaks and comparing the area (heat of fusion) of each melting peak, the melting peak having the largest area can be determined. The valley temperature of the DSC curve can be determined from the temperature at which the value of the ordinate of the derivative curve is 0 by referring to the derivative curve of the DSC (DDSC).

«Double peaks»

From the viewpoint of stably obtaining an expanded bead that can suppress deposition of the covering layer on the mold for molding at the time of in-mold molding, it is preferable that the polypropylene-based resin (b) exhibits, in the DSC curve of the polypropylene-based resin (b) at the time of second heating, obtained by heat flux differential scanning calorimetry (DSC method) in accordance with JIS K 7121:1987, melting peaks having a first melting peak and a second melting peak, which appears on the higher temperature side than the first melting peak. In this context, having a first melting peak and a second melting peak, which appears on the higher temperature side than the first melting peak, means that the first melting peak and the second melting peak, which appears on the higher temperature side than the first melting peak, have peak top temperatures of peaks different from each other and that the heat of fusion of each melting peak is 10 J/g or more. Note that the DSC curve at the time of second heating can be determined by the same operations as those for determining the melting point of the polypropylene-based resin (b). In addition, it is preferable that the peak top temperature $Tm_{b1}$ of the first melting peak is the melting point $Tm_b$ of the polypropylene-based resin (b).

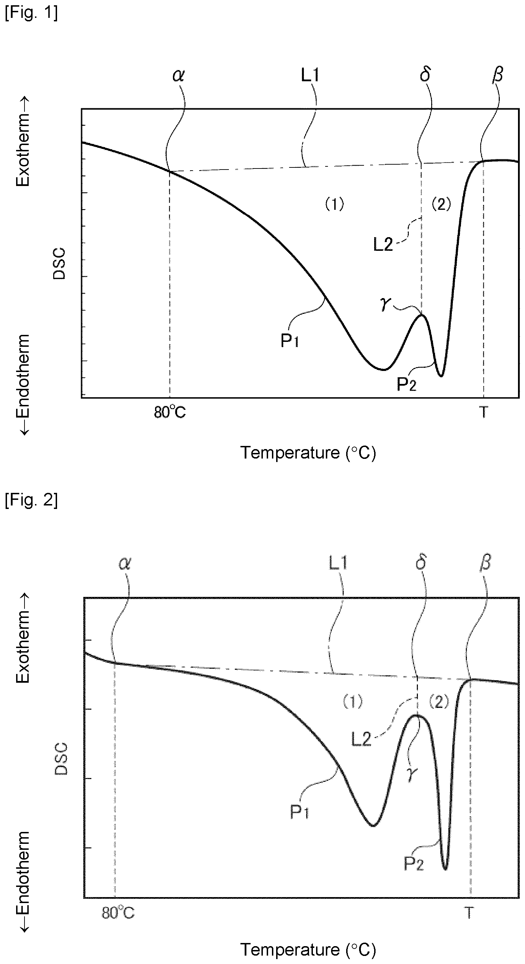

Fig. 1 shows an example of the DSC curve in the case where melting peaks having a first melting peak and a second melting peak, which appears on the higher temperature side than the first melting peak, appear in the DSC curve at the time of second heating.

In the case where melting peaks as shown in Fig. 1 appear, the heat of fusion of each melting peak can be determined as follows. At first, the point at a temperature of 80°C on the DSC curve is defined as $\alpha$, and the point on the DSC curve corresponding to the end temperature of melting is defined as $\beta$. Also, a straight line L2 parallel to the ordinate of the graph is drawn from the point $\gamma$ on the DSC curve corresponding to the valley between the melting peak (first melting peak) $P_1$ on the lower temperature side and the melting peak (second melting peak) $P_2$ on the higher temperature side, and the point at which it intersects the straight line L1 connecting the point $\alpha$ and the point $\beta$ is defined as $\delta$. Note that the point $\gamma$ on the DSC curve corresponding to the valley between the melting peak $P_1$ on the lower temperature side and the melting peak $P_2$ on the higher temperature side is the point at the temperature where the value of the ordinate is 0 in the derivative curve of the DSC (DDSC) around that temperature, and therefore, the point $\gamma$ can be determined based on this temperature.

The area (1) of the melting peak $P_1$ on the lower temperature side is the heat of fusion $\Delta h1$ of the first melting peak $P_1$, and determined as the area of the part surrounded by the DSC curve depicting the melting peak $P_1$ on the lower temperature side, the line segment ($\alpha$-$\delta$), and the line segment ($\gamma$-$\delta$).

The area (2) of the melting peak $P_2$ on the higher temperature side is the heat of fusion $\Delta h2$ of the second melting peak $P_2$, and determined as the area of the part surrounded by the DSC curve depicting the melting peak $P_2$ on the higher temperature side, the line segment ($\delta$-$\beta$), and the line segment ($\gamma$-$\delta$).

The first melting peak and the second melting peak, which appears on the higher temperature side than the first melting peak, in the DSC curve of the polypropylene-based resin (b) at the time of second heating may also be collectively referred to as the double peaks herein. Note that the first melting peak and the second melting peak may partially overlap with each other.

In the case where three or more melting peaks appear in the DSC curve of the above polypropylene-based resin (b) at the time of second heating, the melting peak having the peak top temperature on the lowest temperature side and having a heat of fusion of 10 J/g or more is defined as the first melting peak, and the melting peak having the peak top temperature on the highest temperature side and having a heat of fusion of 10 J/g or more is defined as the second melting peak.

<<Difference between peak top temperature $Tm_{b2}$ of second melting peak and peak top temperature $Tm_{b1}$ of first melting peak>>

In the case where double peaks appear in the DSC curve of the polypropylene-based resin (b), the difference $[Tm_{b2} - Tm_{b1}]$ between the peak top temperature $Tm_{b2}$ of the second melting peak of the polypropylene-based resin (b) and the peak top temperature $Tm_{b1}$ of the first melting peak is preferably 5°C or more, more preferably 8°C or more, and still more preferably 10°C or more, from the viewpoint of easily suppressing deposition of the covering layer on the mold for molding at the time of in-mold molding while enhancing the fusion bonding properties between the expanded beads. Also, from the same viewpoint, the above difference $[Tm_{b2} - Tm_{b1}]$ is preferably 20°C or less, more preferably 17°C or less, and still more preferably 15°C or less. That is, the above difference $[Tm_{b2} - Tm_{b1}]$ is preferably 5°C to 20°C, more preferably 8°C to 17°C, and still more preferably 10°C to 15°C.

<<Difference $[Tm_a - Tm_{b2}]$ between melting point $Tm_a$ and peak top temperature $Tm_{b2}$ of second melting peak>>

In the case where double peaks appear in the DSC curve of the polypropylene-based resin (b), the difference $[Tm_a - Tm_{b2}]$ between the melting point $Tm_a$ of the polypropylene-based resin (a) and the peak top temperature $Tm_{b2}$ of the second melting peak of the polypropylene-based resin (b) is preferably 15°C or less, more preferably 13°C or less, and still more preferably 10°C or less, from the viewpoint of easily suppressing deposition of the covering layer on the mold for molding at the time of in-mold molding. Also, although the less limit of the above difference $[Tm_a - Tm_{b2}]$ is not particularly limited, it is generally -5°C, preferably 0°C, and more preferably 3°C. That is, the above difference $[Tm_a - Tm_{b2}]$ is preferably -5°C to 15°C, more preferably 0°C to 13°C, still more preferably 0°C to 13°C, and even more preferably 3°C to 10°C.

<<Total heat of fusion $\Delta h_b$>>

The total heat of fusion $\Delta h_b$ of the polypropylene-based resin (b) is preferably 70 J/g or less, more preferably 65 J/g or less, still more preferably less than 60 J/g, and particularly preferably 58 J/g or less, from the viewpoint of enhancing the fusion bonding properties between the expanded beads in the case where in-mold molding is performed at a low molding pressure. Also, the total heat of fusion $\Delta h_b$ is preferably 40 J/g or more, more preferably 50 J/g or more, and still more preferably 55 J/g or more, from the viewpoint of easily enhancing the mechanical properties of the resulting molded article. That is, the total heat of fusion $\Delta h_b$ of the polypropylene-based resin (b) is preferably 40 to 70 J/g, more preferably 40 to 65 J/g, still more preferably 50 J/g or more and less than 60 J/g, and even more preferably 55 to 58 J/g.

The total heat of fusion $\Delta h_b$ of the polypropylene-based resin (b) can be determined by the same method as that for the total heat of fusion of the polypropylene-based resin (a). Note that, in the case where the polypropylene-based resin (b) has double peaks as shown in Fig. 1, the total heat of fusion $\Delta h_b$ of the polypropylene-based resin (b) is the total heat of the heat of fusion $\Delta h1$ of the first melting peak and the heat of fusion $\Delta h2$ of the second melting peak.

<<Ratio of heat of fusion $\Delta h_{b2}$ of second melting peak to total heat of fusion $\Delta h_b$>>

In the case where double peaks appear in the DSC curve of the polypropylene-based resin (b), the ratio $[\Delta h_{b2}/\Delta h_b]$ of the heat of fusion $\Delta h_{b2}$ of the second melting peak of the polypropylene-based resin (b) to the total heat of fusion $\Delta h_b$ of the polypropylene-based resin (b) is preferably 0.1 or more, more preferably 0.2 or more, from the viewpoint of easily suppressing deposition of the covering layer on the mold for molding at the time of in-mold molding while enhancing the fusion bonding properties between the expanded beads. Also, from the same viewpoint, the above ratio $[\Delta h_{b2}/\Delta h_b]$ is preferably 0.5 or less, more preferably 0.4 or less. That is, the above ratio $[\Delta h_{b2}/\Delta h_b]$ is preferably 0.1 to 0.5, more preferably 0.2 to 0.4.

<<Difference $[Tm_b - Tc_b]$ between melting point $Tm_b$ and crystallization temperature $Tc_b$>>

The difference $[Tm_b - Tc_b]$ between the melting point $Tm_b$ of the polypropylene-based resin (b) and the crystallization temperature $Tc_b$ of the polypropylene-based resin (b) is 40°C or less. In the case where the difference [$Tm_b$ - $Tc_b$] is too large, even if the mold for molding is cooled in in-mold molding during the period between the completion of heating of the expanded beads and the removal of the expanded beads molded article from the mold for molding, it is presumed that solidification of the polypropylene-based resin (b) does not progress sufficiently and the resin is likely to remain in a softened state for a long period of time. As a result of this, for example, it is presumed that the covering layer is more likely to be deposited on the locations of the mold for molding that are easily heated, and that the covering layer is more likely to be deposited near vent holes when the expanded beads encroach on the vent holes for introducing molding steam due to secondary expansion, thereby making it easier for deposits to accumulate on the mold for molding. From the viewpoint of further suppressing deposition of the covering layer on the mold for molding, the above difference [$Tm_b$ - $Tc_b$] is preferably 35°C or less, more preferably 30°C or less, and still more preferably 25°C or less. When the difference between the melting point and the crystallization temperature of the polypropylene-based resin (b) constituting the covering layer is relatively small, it is presumed that solidification of the polypropylene-based resin (b) proceeds at an early stage as the mold for molding is cooled after the completion of heating of the expanded beads, thereby making it less likely that the resin of the covering layer is deposited on the mold for molding. Also, although the lower limit of the above difference [$Tm_b$ - $Tc_b$] is not particularly limited, it is usually 10°C and may be 15°C. That is, the above difference [$Tm_b$ - $Tc_b$] is preferably 10°C to 40°C, more preferably 10°C to 35°C, still more preferably 15°C to 30°C, and even more preferably 15°C to 25°C.

The crystallization temperature $Tc_b$ of the polypropylene-based resin (b) can be determined by the same method as that for the crystallization temperature of the polypropylene-based resin (a).

Note that the crystallization temperature is the temperature at which the heat released as the resin is crystallized reaches the maximum when the resin in a molten state is cooled under certain conditions, and is an indicator of how easily the molten resin is solidified as it is cooled. Therefore, in the present invention, the difference between the melting point and the crystallization temperature of the polypropylene-based resin (b) is considered to be an indicator representing the speed of solidification of the molten resin as it is cooled at the time of in-mold molding.

<<Difference [$Tm_{b2}$ - $Tc_b$] between peak top temperature $Tm_{b2}$ of second melting peak and crystallization temperature $Tc_b$>>

In the case where double peaks appear in the DSC curve of the polypropylene-based resin (b), the difference [$Tm_{b2}$ - $Tc_b$] between the peak top temperature $Tm_{b2}$ of the second melting peak of the polypropylene-based resin (b) and the crystallization temperature $Tc_b$ of the polypropylene-based resin (b) is preferably 40°C or less, more preferably 35°C or less, from the viewpoint of suppressing deposition of the covering layer on the mold for molding at the time of in-mold molding in a more stable manner. Also, although the lower limit of the above difference [$Tm_{b2}$ - $Tc_b$] is not particularly limited, it is usually 20°C and may be 25°C. That is, the above difference [$Tm_{b2}$ - $Tc_b$] is preferably 20°C to 40°C, more preferably 25°C to 35°C.

<<Crystallization temperature $Tc_b$>>

The crystallization temperature $Tc_b$ of the polypropylene-based resin (b) is preferably 95°C or higher, more preferably 98°C or higher, from the viewpoint of suppressing deposition of the covering layer on the mold for molding at the time of in-mold molding in a more stable manner. Also, although the upper limit of the crystallization temperature $Tc_b$ is not particularly limited, it is generally 115°C, more preferably 110°C, and still more preferably 105°C. That is, the crystallization temperature $Tc_b$ of the polypropylene-based resin (b) is preferably 95°C to 115°C, more preferably 95°C to 110°C, and still more preferably 98°C to 105°C.

<<Difference [$Tc_a$ - $Tc_b$] between crystallization temperature $Tc_a$ and crystallization temperature $Tc_b$>>

The difference [$Tc_a$ - $Tc_b$] between the crystallization temperature $Tc_a$ of the polypropylene-based resin (a) and the crystallization temperature $Tc_b$ of the polypropylene-based resin (b) is preferably 3°C or less, more preferably 0°C or less. In this case, when the crystallization temperature of the resin constituting the core layer is at the same degree as the crystallization temperature of the resin constituting the covering layer, or is higher than the crystallization temperature of the resin constituting the core layer, it is presumed that deposition of the covering layer on the mold for molding at the time of in-mold molding is more easily suppressed. Also, although the lower limit of the above difference [$Tc_a$ - $Tc_b$] is not particularly limited, it is preferably -10°C, more preferably -8°C, and still more preferably -6°C. That is, the above difference [$Tc_a$ - $Tc_b$] is preferably -10°C to 3°C, more preferably - 8°C to 3°C, and still more preferably -6°C to 0°C.

«Flexural modulus»

The flexural modulus of the polypropylene-based resin (b) is preferably 500 MPa or more, more preferably 600 MPa or more, still more preferably 700 MPa or more, and even more preferably 750 MPa or more, from the viewpoint of achieving both mechanical strength and moldability of the expanded beads molded article. Also, although the upper limit of the flexural modulus of the polypropylene-based resin (b) is not particularly limited, it is generally 1200 MPa, more preferably 1000 MPa, and still more preferably 900 MPa. That is, the flexural modulus of the polypropylene-based resin (b) is preferably 500 to 1200 MPa, more preferably 600 to 1200 MPa, still more preferably 700 to 1000 MPa, and even more preferably 750 to 900 MPa.

The flexural modulus of the polypropylene-based resin (a) can be determined in accordance with JIS K 7171:2016.

(Higher fatty acid amide)

The covering layer of the polypropylene-based resin expanded bead contains a higher fatty acid amide. In the case where the covering layer does not contain a higher fatty acid amide, it is difficult to suppress deposition of the resin of the covering layer on the mold for molding at the time of in-mold molding.

The covering layer in the expanded bead of the present invention has as the base material resin the polypropylene-based resin (b), which is composed mainly of the propylene-based copolymer containing a propylene component, an ethylene component, and a butene component. As described above, in the case where the resin is used as the covering layer, the expanded bead comes to have excellent fusion bonding properties between the expanded beads and an expanded beads molded article excellent in mechanical strength can be obtained, but deposition of the covering layer on the mold for molding tends to occur easily at the time of in-mold molding. Also, this tendency is more likely to occur near vent holes for introducing molding steam into the molding space.

In the present invention, in particular, by setting the difference between the melting point and the crystallization temperature of the polypropylene-based resin (b) to a specific range and by allowing the covering layer to contain a higher fatty acid amide, even in the case where the base material resin of the covering layer is a polypropylene-based resin composed mainly of a propylene-based copolymer containing a propylene component, an ethylene component, and a butene component, deposition of the covering layer on the mold for molding at the time of in-mold molding can be suppressed while maintaining the fusion bonding properties between the expanded beads, and accumulation of deposits on the mold for molding can be suppressed. As a result of this, even in the case where the expanded beads molded article is produced over a long period of time, the surface properties of the expanded beads molded article that has been in-mold molded are not impaired and productivity can be improved.

In the present invention, the higher fatty acid amide means a fatty acid amide in which the hydrocarbon group has 12 or more carbon atoms. It is preferable that the hydrocarbon group of the higher fatty acid amide has 12 or more and 30 or less carbon atoms. In this case, it is easier to suppress the accumulation of deposits on the mold for molding while maintaining the fusion bonding properties between the expanded beads. From the viewpoint of improving this effect, the hydrocarbon group of the higher fatty acid amide more preferably has 16 or more and 26 or less, still more preferably 18 or more and 24 or less, carbon atoms. Note that the number of carbon atoms in the hydrocarbon group of the higher fatty acid amide is the number of carbon atoms in the hydrocarbon group, excluding the carbon atom that constitutes the amide group. For example, in the case where the higher fatty acid amide is a primary amide, the higher fatty acid amide is represented by the general formula: $RCONH_2$ and is a compound having a hydrocarbon group (specifically, a long-chain fatty acid group) and an amide group. R in the general formula: $RCONH_2$ is a hydrocarbon group.

The higher fatty acid amide may be a saturated fatty acid amide or may be an unsaturated fatty acid amide. From the viewpoint of easily obtaining a molded article having good mechanical properties in a stable manner while suppressing the accumulation of deposits on the mold for molding, it is preferably an unsaturated fatty acid amide. Also, the higher fatty acid amide may be a primary amide, a secondary amide, or a tertiary amide. From the viewpoint of being easily dispersed in the resin constituting the covering layer, it is preferably a primary amide.

Specific examples of the higher fatty acid amide include saturated fatty acid amides such as lauric acid amide, palmitic acid amide, stearic acid amide, and behenic acid amide; and unsaturated fatty acid amides such as oleic acid amide, erucic acid amide, and nervonic acid amide. The covering layer can contain one or two or more higher fatty acid amides. From the viewpoint of being able to stably obtain an expanded bead with which the accumulation of deposits on the mold for molding is suppressed while maintaining the fusion bonding properties, it is preferable that the higher fatty acid amide contains at least erucic acid amide.

Also, in the case where the higher fatty acid amide contains erucic acid amide, the proportion of erucic acid amide in the higher fatty acid amide is preferably 50% by mass or more, more preferably 60% by mass or more, still more preferably 80% by mass or more, and particularly preferably 90% by mass or more.

The content of the higher fatty acid amide in the covering layer is preferably 0.02% by mass or more, more preferably 0.1% by mass or more, and still more preferably 0.2% by mass or more, from the viewpoint of suppressing deposition of the covering layer on the mold for molding at the time of in-mold molding in a stable manner. Also, the content of the higher fatty acid amide in the covering layer is preferably 2% by mass or less, more preferably 1% by mass or less, and still more preferably 0.8% by mass or less, from the viewpoint of suppressing an excessive decrease in the fusion bonding properties between the expanded beads. That is, the content of the higher fatty acid amide in the covering layer is preferably 0.02 to 2% by mass, more preferably 0.1 to 1% by mass, and still more preferably 0.2 to 0.8% by mass.

The covering layer may contain an additive such as a flame retardant, a flame retardant synergist, a cell nucleating agent, an antistatic agent, an antioxidant, a UV absorbing agent, a light stabilizer, a conductive material, and a coloring agent to the extent that the object and advantageous effects of the present invention are not inhibited.

In addition, it is preferable that the covering layer should contain carbon black. In this case, the content of the carbon black in the covering layer is preferably 0.5% by mass or more and 5% by mass or less, more preferably 1% by mass or more and 4% by mass or less, and still more preferably 2% by mass or more and 3% by mass or less. In this case, it is easier to further suppress the accumulation of deposits inside the mold for molding while ensuring the fusion bonding properties of the expanded bead. Also, in the case where the expanded core layer and the covering layer contain carbon black, it is easier to make the shade of color of the molded article more uniform.

Note that the content of carbon black in the core layer and the covering layer generally matches with the amount of carbon black compounded in the core layer and the fusion-bonded layer at the time of expanded bead production.

[Physical properties of polypropylene-based resin expanded bead]

<Bulk density>

The bulk density of the polypropylene-based resin expanded beads is preferably 10 kg/m$^3$ or more, more preferably 15 kg/m$^3$ or more, and still more preferably 20 kg/m$^3$ or more, from the viewpoint of enhancing the mechanical strength of the expanded beads molded article. Also, the bulk density of the polypropylene-based resin expanded beads is preferably 100 kg/m$^3$ or less, more preferably 70 kg/m$^3$ or less, still more preferably 50 kg/m$^3$ or less, and even more preferably 30 kg/m$^3$ or less, from the viewpoint of enhancing the lightness in weight of the expanded beads molded article. That is, the bulk density of the polypropylene-based resin expanded beads is preferably 10 to 100 kg/m$^3$, more preferably 10 to 70 kg/m$^3$, still more preferably 15 to 50 kg/m$^3$, and even more preferably 15 to 30 kg/m$^3$.

The bulk density of the expanded beads is determined as follows. At first, a group of expanded beads with a mass of W1 [g] is filled into a graduated cylinder, and the filling height of the group of expanded beads in the graduated cylinder is stabilized by lightly tapping the floor with the bottom of the graduated cylinder a few times. Next, the volume V1 ([L]) of the group of expanded beads indicated by the scale on the graduated cylinder is read. By dividing the mass W1 of the group of expanded beads by the volume V1 (W1/V1) and converting the unit to [kg/m$^3$], the bulk density of the expanded beads is determined.

The expanded bead preferably has a crystal structure where a melting peak ascribable to melting of crystals intrinsic for a polypropylene-based resin (that is, a resin-intrinsic peak), and one or more melting peaks on the higher temperature side therefrom (that is, high-temperature peaks) appear in a DSC curve obtained when the expanded bead is heated from 23°C to 200°C at a heating rate of 10°C/min. The DSC curve is obtained by carrying out differential scanning calorimetry (DSC) using 1 to 3 mg of expanded beads as a test sample in accordance with JIS K 7121:1987. The resin-intrinsic peak refers to a melting peak ascribable to melting of crystals intrinsic for the polypropylene-based resin constituting the expanded bead, and is presumably an endothermic peak appearing due to endotherm at the time of melting of the crystals that the polypropylene-based resin usually has. On the other hand, the melting peaks on the higher temperature side (that is, the high-temperature peaks) from the resin-intrinsic peak refer to melting peaks appearing on the higher temperature side than the above resin-intrinsic peak in the DSC curve. In the case where these high-temperature peaks appear, it is presumed that secondary crystals are present in the resin. Note that, in a DSC curve obtained when the expanded bead is heated from 23°C to 200°C at a heating rate of 10°C/min (that is, the first heating), then cooled from 200°C to 23°C at a cooling rate of 10°C/min, and then heated again from 23°C to 200°C at a heating rate of 10°C/min (that is, the second heating), only the melting peak ascribable to melting of crystals intrinsic for the polypropylene-based resin constituting the expanded bead is seen. Therefore, the resin-intrinsic peak can be distinguished from the high-temperature peaks. Although the peak top temperature of this resin-intrinsic peak may differ to a certain extent between the first heating and the second heating, the difference is usually within 5°C.

<Heat of fusion ΔH2 of high-temperature peak>

The heat of fusion ΔH2 of the high-temperature peak of the polypropylene-based resin expanded bead is preferably 5 J/g or more, more preferably 8 J/g or more, and still more preferably 10 J/g or more, from the viewpoint of being able to widen the range of molding conditions under which a good molded article can be obtained while enhancing the mechanical strength of the expanded bead. Also, from the same viewpoint, the heat of fusion ΔH2 of the high-temperature peak of the expanded bead is preferably 40 J/g or less, more preferably 30 J/g or less, and still more preferably 20 J/g or less. That is, the heat of fusion ΔH2 of the high-temperature peak of the polypropylene-based resin expanded bead is preferably 5 to 40 J/g, more preferably 8 to 30 J/g, and still more preferably 10 to 20 J/g.

Fig. 2 shows an example of the DSC curve in the case where the resin-intrinsic peak and the high-temperature peak on the higher temperature side than the resin-intrinsic peak appear in a DSC curve (DSC curve at the time of first heating) when the expanded bead is heated from 23°C to 200°C at a heating rate of 10°C/min. In the case where a high-temperature peak as shown in Fig. 2 appears, the heat of fusion thereof can be determined as follows. At first, the point at a temperature of 80°C on the DSC curve is defined as α, the point on the DSC curve corresponding to the end temperature of melting is defined as β, and a line (α-β) connecting them is drawn. Next, a straight line parallel to the ordinate of the graph is drawn from the point γ on the DSC curve corresponding to the valley between the resin-intrinsic peak and the high-temperature peak, and the point at which it intersects the straight line (α-β) is defined as δ. The area of the part surrounded by the curve of the high-temperature peak part of the DSC curve, the line segment (δ-β), and the line segment (γ-δ) is defined as the area of the high-temperature peak, and from this area, the heat of fusion of the high-temperature peak can be obtained.

<Total heat of fusion ΔH>

The total heat of fusion ΔH of the polypropylene-based resin expanded bead is preferably 25 J/g or more, more preferably 40 J/g or more, and still more preferably 50 J/g or more, from the viewpoint of enhancing the mechanical strength of the resulting expanded beads molded article. Also, the total heat of fusion ΔH of the expanded bead is preferably 200 J/g or less, more preferably 150 J/g or less, still more preferably 100 J/g or less, and even more preferably 80 J/g or less, from the viewpoint of enhancing the in-mold moldability of the expanded bead. That is, the total heat of fusion ΔH of the polypropylene-based resin expanded bead is preferably 25 to 200 J/g, more preferably 40 to 150 J/g, still more preferably 50 to 100 J/g, and even more preferably 50 to 80 J/g.

The total heat of fusion ΔH of the polypropylene-based resin expanded bead can be determined from the area of the part surrounded by the DSC curve at an interval between the point α and the point β and the line segment (α-β) in the DSC curve at the time of first heating of the expanded bead.

(Mass ratio between core layer and covering layer)

The mass ratio (mass of core layer:mass of covering layer) between the core layer in an expanded state and the covering layer in the polypropylene-based resin expanded bead is preferably 99.5:0.5 to 90: 10, more preferably 99: 1 to 92:8, and still more preferably from 98:2 to 94:6, from the viewpoint of enhancing in-mold moldability while maintaining the mechanical properties of the molded article.

[Method for producing polypropylene-based resin expanded bead]

Although the method for producing the polypropylene-based resin expanded bead is not particularly limited, the polypropylene-based resin expanded bead can be obtained by expanding a polypropylene-based resin particle having: a core layer having the polypropylene-based resin (a) as the base material resin; and a covering layer containing the polypropylene-based resin (b) as the base material resin and containing a higher fatty acid amide, the covering layer covering the core layer.

More specifically, it can be produced by a method including the following steps (A) to (C):

step (A): a step of providing a polypropylene-based resin particle having: a core layer containing the polypropylene-based resin (a) as the base material resin; and a covering layer containing the polypropylene-based resin (b) as the base material resin and containing a higher fatty acid amide, the covering layer covering the core layer;
step (B): a step of impregnating the resin particle with a blowing agent; and
step (C): a step of expanding the resin particle that has been impregnated with the blowing agent to obtain an expanded bead in which a core layer in an expanded state is formed.

<Step (A)>

In the step (A), for example, an extruding device having an extruder for core layer formation, an extruder for covering layer formation, and a die for coextrusion such as a die for multi-layered strand formation linked on the outlet side of these extruders can be used. The polypropylene-based resin (a), which is the base material resin of the core layer, and additives added as necessary, can be supplied to the extruder for core layer formation and melt-kneaded to form a resin molten product for core layer formation. The polypropylene-based resin (b), which is the base material resin of the covering layer, the higher fatty acid amide, and additives added as necessary, can be supplied to the extruder for covering layer formation and melt-kneaded to form a resin molten product for covering layer formation. The resin molten product for core layer formation and the resin molten product for covering layer formation are introduced into the die for coextrusion and merged to form a composite with a multi-layered structure. Then, by extruding the composite from the extruding device and granulating it to a predetermined mass, a resin particle with a multi-layered structure can be obtained that has a core layer in a non-expanded state and a covering layer in a non-expanded state that covers the core layer. Note that, as the method for granulating a resin particle with a multi-layered structure, the following methods can be adopted: the strand cut method, in which the composite is extruded in a strand-like form through small holes of a die annexed on the downstream side of the extruding device, cooled in water, and then cut; the underwater cut method, in which the composite is extruded and cut in water; the hot cut method, in which the composite is cut immediately after extrusion into air; and other methods.

(Particle size of resin particle)

The particle size of the resin particle is preferably 0.1 to 3.0 mm, more preferably 0.3 to 1.5 mm. Note that, in the case where the external shape of the resin particle is cylindrical, the length of the resin particle in the extrusion direction corresponds to the particle size.

(Mass of resin particle)

The average value of the mass of the resin particles is preferably adjusted to 0.1 to 20 mg, more preferably 0.2 to 10 mg, still more preferably 0.3 to 5 mg, and even more preferably 0.4 to 2 mg.

(Mass ratio between covering layer and core layer)

When producing the resin particle, the mass ratio (core layer: covering layer) between the core layer in a non-expanded state and the covering layer is 99.5:0.5 to 90:10, more preferably 99:1 to 92:8, and still more preferably 98:2 to 94:6, from the viewpoint of achieving a more excellent balance between the fusion bonding properties of the expanded bead and the physical properties of the resulting molded article.

(Additive)

To the resin particle having the core layer in a non-expanded state and the covering layer, an additive can be added, if necessary, such as a cell adjusting agent, a flame retardant, a flame retardant synergist, a cell nucleating agent, a plasticizer, an antistatic agent, an antioxidant, a UV absorbing agent, a light stabilizer, a conductive filler, and an antimicrobial agent. In the case where additives are added, they can be added in the step (A). Examples of the cell adjusting agent include: inorganic powders such as talc, mica, zinc borate, calcium carbonate, silica, titanium oxide, gypsum, zeolite, borax, and aluminum hydroxide; and organic powders such as phosphate nucleating agents, phenol nucleating agents, amine nucleating agents, and polyethylene fluoride resin powders. In the case where the cell adjusting agent is added, the content of the cell adjusting agent in the resin particle is preferably 0.01 to 1 part by mass based on 100 parts by mass of the resin particle.

<Step (B)>

In the step (B), for example, by heating the resin particle to a temperature at which the polypropylene-based resin (a), which is the base material resin of the core layer, is softened, or higher, and by impregnating it with a blowing agent, an expandable resin particle can be obtained.

Also, in the step (B), for example, by placing a dispersing medium and the resin particle in a sealable vessel that can be sealed and can withstand heating and pressurization, such as an autoclave, and dispersing the resin particle in the dispersing medium using a stirrer, for example, and also adding a blowing agent into the sealable vessel, the resin particle can be impregnated with the blowing agent.

The dispersing medium is not particularly limited as long as it is a dispersing medium that does not dissolve the resin particle. Examples thereof include water and alcohols such as ethylene glycol, glycerin, methanol, and ethanol, and among the above, water is preferred.

In order to prevent coalescence between the resin particles, it is preferable to further add a dispersant to the dispersing medium. Examples of the dispersant include: organic dispersants such as polyvinyl alcohol, polyvinylpyrrolidone, and methylcellulose; and poorly soluble inorganic salts such as aluminum oxide, zinc oxide, kaolin, mica, magnesium phosphate, and tricalcium phosphate. These dispersants can be used singly or in combination of two or more types. Among the above, it is preferable to use a poorly soluble inorganic salt, and it is more preferable to use kaolin, because of easy handling. In the case where a dispersant is added, it is preferable to add about 0.001 to 5 parts by mass of the dispersant based on 100 parts by mass of the resin particle.

To the dispersing medium, a surfactant can also be further added. Examples of the surfactant include sodium dodecyl benzenesulfonate, sodium alkyl sulfonate, sodium oleate, sodium lauryl sulfate, sodium polyoxyethylene alkyl ether phosphate, sodium polyoxyethylene alkyl ether sulfate, and anionic surfactants and nonionic surfactants that are generally used in suspension polymerization. In the case where a surfactant is added, it is preferable to add about 0.001 to 1 part by mass of the surfactant based on 100 parts by mass of the resin particle.

The blowing agent is not particularly limited as long as it can expand the resin particle. Examples of the blowing agent include: inorganic physical blowing agents such as air, nitrogen, carbon dioxide, argon, helium, oxygen, and neon; and organic physical blowing agents including aliphatic hydrocarbons such as propane, normal butane, isobutane, normal pentane, isopentane, and normal hexane, alicyclic hydrocarbons such as cyclohexane and cyclopentane, halogenated hydrocarbons such as ethyl chloride, 2,3,3,3-tetrafluoropropene, trans-1,3,3,3-tetrafluoropropene, and trans-1-chloro-3,3,3-trifluoropropene, and dialkyl ethers such as dimethyl ether, diethyl ether, and methyl ethyl ether. Among the above, it is preferable to use an inorganic physical blowing agent that has a low environmental impact and is inexpensive, it is more preferable to use nitrogen, air, or carbon dioxide, and it is particularly preferable to use carbon dioxide. These blowing agents can be used singly or in combination of two or more types.

Although the amount of the blowing agent added is determined in consideration of the desired bulk density of the expanded beads, the type of the polypropylene-based resin, the type of the blowing agent, and other factors, in the case where an organic physical blowing agent is used, it is preferably 5 to 50 parts by mass based on 100 parts by mass of the resin particle. Also, in the case where an inorganic physical blowing agent is used, the amount added is preferably 0.1 to 30 parts by mass, more preferably 0.5 to 15 parts by mass, based on 100 parts by mass of the resin particle.

The heating temperature in the step (B) is preferably 100°C to 200°C, more preferably 130°C to 160°C. Also, the holding time at the heating temperature is preferably 1 to 100 minutes, more preferably 10 to 60 minutes.

<Step (C)>

In the step (C), for example, by releasing the resin particle that has been impregnated with the blowing agent by to the step (b), together with the dispersing medium, from the inside of the sealable vessel into an atmosphere with a pressure lower than the pressure inside the sealable vessel, at least the core layer is expanded. As a result of this, an expanded bead having an expanded core layer can be produced.

Specifically, while the pressure inside the sealable vessel is held at a pressure equal to or higher than the vapor pressure of the blowing agent, one end beneath the water surface in the sealable vessel is opened so that the resin particle impregnated with the blowing agent is released together with the dispersing medium from the inside of the sealable vessel into an atmosphere with a pressure lower than the pressure inside the sealable vessel, usually atmospheric pressure, and at least the core layer of the resin particle can be expanded into an expanded core layer to prepare an expanded bead with a multi-layered structure that has an expanded core layer and a covering layer that covers the expanded core layer. Note that an expanded bead may also be manufactured by heating and expanding the expandable resin particle obtained by the step (B) with a heating medium such as hot air or steam.

In the case where the expandable resin particle is released from the inside of the sealable vessel into an atmosphere with a pressure lower than the pressure inside the sealable vessel to expand it, usually, the temperature at the time of expanding is preferably 110°C to 170°C. Also, the pressure inside the sealable vessel is preferably 0.5 to 5 MPa (G). Note that the pressure with (G) is a gauge pressure, that is, a pressure value based on atmospheric pressure.

Although the above steps (B) and (C) are preferably carried out as a series of steps in a single sealable vessel, they may be performed as separate steps in such a way that the resin particle is removed in each step, added into a sealable vessel again, and subjected to the next step.

Also, for example, an expanded bead having a crystal structure where a melting peak intrinsic for a resin (resin-intrinsic peak) and one or more melting peaks on the higher temperature side therefrom (high-temperature peaks) appear in a DSC curve at the time of first heating obtained by differential scanning calorimetry (DSC) of the expanded bead is obtained as follows.

At first, the resin particle dispersed in the dispersing medium in the sealable vessel is heated to a temperature of (melting point of the polypropylene-based resin (a) - 15°C) to (end temperature of melting of the polypropylene-based resin (a) + 10°C) and also held at this temperature for a sufficient time, preferably for about 10 to 60 minutes (holding step). Next, by expanding the resin particle that has undergone this holding step, an expanded bead having the crystalline structure described above can be obtained. The above holding step can be carried out as part of the above step (B).

From the viewpoint of enhancing the productivity of the expanded bead, it is preferable to heat the resin particle dispersed in the dispersing medium in the sealable vessel in the presence of the blowing agent and carry out the above holding step, and then release the contents of the sealable vessel from the inside of the sealable vessel into an atmosphere with a pressure lower than the pressure inside the sealable vessel to expand them, thereby obtaining an expanded bead having the crystalline structure described above.

The expanded bead obtained as described above can also be subjected to a pressurization treatment with air or the like to increase the internal pressure in cells of the expanded bead, and then the expanded bead can be heated with steam or the like to cause expansion (two-stage expansion), thereby obtaining an expanded bead with an even higher expansion ratio (lower bulk density).

[Polypropylene-based resin expanded beads molded article]

A polypropylene-based resin expanded beads molded article obtained using the polypropylene-based resin expanded bead of the present invention is an in-mold molded article of the polypropylene-based resin expanded beads, and can be obtained by in-mold molding the polypropylene-based resin expanded beads of the present invention.

The in-mold molding method can be carried out by filling expanded beads into a mold for molding and molding it by heating using a heating medium such as steam. Specifically, expanded beads are filled into a mold for molding, and then, a heating medium such as steam is introduced into the mold for molding so that the expanded beads are expanded by heating and also fusion bonded to each other, thereby obtaining an expanded beads molded article to which the shape of molding space has been imparted. Also, the in-mold molding in the present invention can be performed by the pressurization molding method (for example, JP S51-22951 A) in which expanded beads are subjected to a pre-pressurization treatment with a pressurized gas such as air to increase the pressure in cells of the expanded beads so that the pressure in the expanded beads are adjusted to a pressure 0.01 to 0.3 MPa higher than atmospheric pressure, the expanded beads are then filled into a mold for molding under atmospheric pressure or under reduced pressure, and subsequently, a heating medium such as steam is supplied into the mold to heat and fusion bond the expanded beads. Alternatively, the molding can also be performed by the compression filling molding method (JP H4-46217 A) in which a mold for molding that has been pressurized to atmospheric pressure or higher by a compressed gas is filled with expanded beads that have been pressurized to that pressure or higher, and then a heating medium such as steam is supplied into the cavity to carry out heating, causing the expanded beads to be heated and fusion bonded. In addition, the molding can also be performed by the ambient pressure filling molding method (JP H6-49795 A) in which expanded beads with a high secondary expanding force obtained under special conditions are filled into the cavity of a mold for molding under atmospheric pressure or under reduced pressure, after which a heating medium such as steam is then supplied to carry out heating, thereby heating and fusion bonding the expanded beads, or by the method in which the above methods are combined (JP H6-22919 A) or the like.

<Density>

The density of the polypropylene-based resin expanded beads molded article is preferably 10 kg/m³ or more, more preferably 15 kg/m³ or more, and still more preferably 20 kg/m³ or more, from the viewpoint of enhancing the mechanical strength. Also, the density of the polypropylene-based resin expanded beads molded article is preferably 150 kg/m³ or less, more preferably 100 kg/m³ or less, still more preferably 50 kg/m³ or less, and even more preferably 35 kg/m³ or less, from the viewpoint of enhancing the lightness in weight. That is, the density of the polypropylene-based resin expanded beads molded article is preferably 10 to 150 kg/m³, more preferably 10 to 100 kg/m³, still more preferably 15 to 50 kg/m³, and even more preferably 20 to 35 kg/m³.

The density of the polypropylene-based resin expanded beads molded article is calculated by dividing the mass (g) of the expanded beads molded article by the volume (L) determined from the external dimensions of the molded article, followed by unit conversion. Note that, in the case where it is not easy to determine the volume from the external dimensions of the molded article, the volume of the molded article can be determined by the submersion method.

<50% compression stress>

The 50% compression stress of the polypropylene-based resin expanded beads molded article is preferably 50 kPa or more, more preferably 100 kPa or more, and still more preferably 150 kPa or more, from the viewpoint of enhancing the rigidity. On the other hand, although the upper limit of the 50% compression stress of the molded article is not particularly limited, it is generally 1 MPa, preferably 500 kPa. That is, the 50% compression stress of the polypropylene-based resin expanded beads molded article is preferably 50 to 1000 kPa, more preferably 100 to 1000 kPa, and still more preferably 150 to 500 kPa.

The 50% compression stress of the expanded beads molded article is measured in accordance with JIS K 6767:1999.

EXAMPLES

Hereinafter, the present invention will be described in detail with reference to Examples. However, the present invention is not limited by these examples by any means.

For the resins, expanded beads, and expanded beads molded articles used in Examples and Comparative Examples, the following measurements or evaluations were carried out. Note that the physical properties of the expanded bead were measured using an expanded bead that had been conditioned by allowing it to stand still for 24 hours under conditions of 50% RH, 23°C, and 1 atm. Also, the physical properties of the expanded beads molded article were measured and evaluated using a molded article that had been conditioned by allowing an expanded beads molded article after mold release to stand still for 12 hours under conditions of 50% RH, 80°C, and 1 atm.

[Measurement methods]

<Polypropylene-based resin>

(Comonomer component content)

The comonomer component content of the polypropylene-based resin was determined by a known method for determining it from the IR spectrum. Specifically, the comonomer component content was determined by the method described in Polymer Analysis Handbook (edited by Research Committee of Polymer Analysis, The Japan Society for Analytical Chemistry, published in January 1995, publisher: KINOKUNIYA COMPANY, LTD., page numbers and section titles: 615-616 "II.2.3 2.3.4 Propylene/Ethylene Copolymer", 618-619 "II.2.3 2.3.5 PropyleneButene Copolymer"), that is, a method of performing quantification from the relationship between the absorbance values of ethylene and butene corrected with predetermined coefficients and the thickness of a test piece in a film-like form or the like. More specifically, the polypropylene-based resin was first molded into a film-like form by hot pressing in an environment of 180°C to prepare a plurality of test pieces differing in thickness. Subsequently, the IR spectrum of each test piece was measured to read the ethylene-derived absorbances at 722 $cm^{-1}$ and 733 $cm^{-1}$ ($A_{722}$ and $A_{733}$) and the butene-derived absorbance at 766 $cm^{-1}$ ($A_{766}$). Subsequently, the ethylene component content in the polypropylene-based resin was calculated for each test piece according to the expressions (1) to (3) given below. The ethylene component contents obtained for the respective test pieces were arithmetically averaged, and the resulting value was defined as the ethylene component content (unit: % by mass) in the polypropylene-based resin.

$$(K'_{733})c = 1/0.96\{(K'_{733})a - 0.268(K'_{722})a\} \dots (1)$$

$$(K'_{722})c = 1/0.96\{(K'_{722})a - 0.150(K'_{733})a\} \dots (2)$$

$$\text{Ethylene component content } (\%) = 0.575\{(K'_{722})c + (K'_{733})c\} \dots (3)$$

Note that, in the expressions (1) to (3), K'a represents the apparent absorption coefficient at each wave number (K'a = A/$\rho$t), K'c represents the absorption coefficient after correction, A represents the absorbance, $\rho$ represents the density of the resin (unit: g/$cm^3$), and t represents the thickness of the test piece in a film-like form (unit: cm).

Also, the butene component content in the polypropylene-based resin was calculated for each test piece according to the expression (4) given below. The butene component contents obtained for the respective test pieces were arithmetically averaged, and the resulting value was defined as the butene component content (% by mass) in the polypropylene-based resin.

$$\text{Butene component content } (\%) = 12.3(A_{766}/L) \dots (4)$$

Note that, in the expression (4), A represents the absorbance, and L represents the thickness of the test piece in a film-like form (mm).

(Peak shape)

For the peak shape of the polypropylene-based resin, in accordance with JIS K 7121:1987, "(2) The case of measuring the melting temperature after carrying out a certain heat treatment" in "3. Conditioning of a test piece" was adopted as the conditioning of the test piece, and the conditioned test piece was heated from 30°C to 200°C at a heating rate of 10°C/min, thereby acquiring a DSC curve. Specifically, about 5 mg of the resin that had been conditioned for 24 hours or longer at 23°C and 50% RH was used as the test piece, and this test piece was heated from 30°C to 200°C at a heating rate of 10°C/min, subsequently cooled from 200°C to 30°C at a cooling rate of 10°C/min, and heated again from 30°C to 200°C at a heating rate of 10°C/min using a heat flux differential scanning calorimeter (manufactured by Shimadzu Corp., model: DSC-60A), thereby acquiring a DSC curve in which the shape of melting peaks was then observed. Note that the peak shape being a double shape in the polypropylene-based resin (b) means that two melting peaks having the peak top temperatures of peaks different from each other appear and these two melting peaks both have a heat of fusion of 10 J/g or more. The heat of fusion was determined by the method described later.

(Melting point Tm)

For the melting point Tm of the polypropylene-based resin, in accordance with JIS K 7121:1987, "(2) The case of measuring the melting temperature after carrying out a certain heat treatment" in "3. Conditioning of a test piece" was adopted as the conditioning of the test piece. Specifically, about 5 mg of the resin that had been conditioned for 24 hours or longer at 23°C and 50% RH was used as the test piece, and this test piece was heated from 30°C to 200°C at a heating rate of 10°C/min, subsequently cooled from 200°C to 30°C at a cooling rate of 10°C/min, and heated again from 30°C to 200°C at a heating rate of 10°C/min using a heat flux differential scanning calorimeter (manufactured by Shimadzu Corp., model: DSC-60A), thereby acquiring a DSC curve. The melting point Tm was determined as the peak top temperature of the melting peak associated with the melting of the resin on the DSC curve.

Note that, in the case where multiple melting peaks appear in the DSC curve of the polypropylene-based resin (b), the peak top temperature of the melting peak having the largest area was adopted as the melting point $Tm_b$. Specifically, in PP1, where double peaks appeared in the DSC curve, the first melting peak had the largest area, and therefore, the peak top temperature $Tm_{b1}$ of the first melting peak was adopted as the melting point $Tm_b$.

The heat of fusion for each melting peak was determined as follows. The point at a temperature of 80°C on the DSC curve was defined as $\alpha$, and the point on the DSC curve corresponding to the end temperature of melting was defined as $\beta$. Also, a straight line L2 parallel to the ordinate of the graph was drawn from the point $\gamma$ on the DSC curve corresponding to the valley between the melting peak Pi on the lower temperature side and the melting peak $P_2$ on the higher temperature side, and the point at which it intersects the straight line L1 connecting the point $\alpha$ and the point $\beta$ was defined as $\delta$. The area (1) of the melting peak Pi on the lower temperature side was the heat of fusion $\Delta h1$ of the melting peak (first melting peak) Pi on the lower temperature side, and determined as the area of the part surrounded by the DSC curve depicting the melting peak Pi on the lower temperature side, the line segment ($\alpha$-$\delta$), and the line segment ($\gamma$-$\delta$). The area (2) of the melting peak $P_2$ on the higher temperature side was the heat of fusion $\Delta h2$ of the melting peak (second melting peak) $P_2$ on the higher temperature side, and determined as the area of the part surrounded by the DSC curve depicting the melting peak $P_2$ on the higher temperature side, the line segment ($\delta$-$\beta$), and the line segment ($\gamma$-$\delta$). For calculation of the heat of fusion of the melting peak, the DSC curve illustrated in Fig. 1 can be referred to.

(Total heat of fusion $\Delta h$)

The total heat of fusion $\Delta h$ of the polypropylene-based resin was determined as follows. At first, on the DSC curve at the time of second heating of the polypropylene-based resin obtained by the above measurement of the melting point, the point at a temperature of 80°C was defined as $\alpha$, and the point on the DSC curve corresponding to the end temperature of melting was defined as $\beta$. The area of the part surrounded by the DSC curve at an interval between the point $\alpha$ and the point $\beta$ and the line segment ($\alpha$-$\beta$) was measured, which was defined as the total heat of fusion $\Delta h$ of the polypropylene-based resin.

(Crystallization temperature Tc)

The crystallization temperature Tc ($Tc_a$ and $Tc_b$) of the polypropylene-based resin was measured using a heat flux differential scanning calorimeter in accordance with JIS K 7121:1987. Note that 10°C per minute was adopted as the cooling rate when measuring the crystallization temperature Tc.

(Flexural modulus)

The flexural modulus of the polypropylene-based resin was measured in accordance with JIS K 7171:2016. At first, the polypropylene-based resin was heat pressed at 230°C to produce a sheet with a thickness of 4 mm, and 80 mm long $\times$ 10 mm wide $\times$ 4 mm thick (standard test piece) was cut from the sheet. A flexural test was carried out by using this test piece and also by setting the radius R1 of the indenter and the radius R2 of the supporting table both to 5 mm, the distance between the supporting points to 64 mm, and a test rate to 2 mm/min.

<Expanded bead>

(Bulk density)

The bulk density of the expanded beads was determined as follows. At first, a group of expanded beads with a mass of W1 [g] was filled into a graduated cylinder, and the filling height of the group of expanded beads in the graduated cylinder was stabilized by lightly tapping the floor with the bottom of the graduated cylinder a few times. Next, the volume V1 ([L]) of the group of expanded beads indicated by the scale on the graduated cylinder was read. By dividing the mass W1 [g] of the group of expanded beads by the volume V1 [L] (W1/V1) and converting the unit to [kg/m$^3$], the bulk density of the expanded beads was determined.

(Heat of fusion ΔH2 of high-temperature peak and total heat of fusion ΔH)

The heat of fusion ΔH2 of the high-temperature peak of the expanded bead was determined as follows. At first, about 2 mg worth of expanded beads were collected from a group of expanded beads. These expanded beads were used as a test piece, and a DSC curve was obtained when the test piece was heated from 23°C to 200°C at a heating rate of 10°C/min using a heat flux differential scanning calorimeter (specifically, manufactured by Shimadzu Corp., model: DSC-60A). The obtained DSC curve had a resin-intrinsic peak $P_1$ and a high-temperature peak $P_2$ on the higher temperature side therefrom. The point α at a temperature of 80°C on the DSC curve and the point β at the end temperature of melting T of the expanded bead were connected to draw a line segment L1. Next, a straight line L2 parallel to the ordinate of the graph was drawn from the point γ on the DSC curve corresponding to the valley between the above resin-intrinsic peak $P_1$ and high-temperature peak $P_2$, and the point at which the straight line L1 intersects the straight line L2 was defined as δ. The area (2) of the high-temperature peak $P_2$ of the expanded bead was the heat of fusion ΔH2 of the high-temperature peak $P_2$, and determined as the area of the part surrounded by the DSC curve depicting the high-temperature peak $P_2$, the line segment (δ-β), and the line segment (γ-δ). The above measurement was carried out for five expanded beads, the obtained values were arithmetically averaged, and the resulting value was defined as the heat of fusion ΔH2 of the high-temperature peak.

Also, the area of the part surrounded by the DSC curve at an interval between the point α and the point β and the line segment L1 was measured. The above measurement was carried out for five expanded beads, the obtained values were arithmetically averaged, and the resulting value was defined as the total heat of fusion ΔH of the expanded bead.

For calculation of the heat of fusion of the melting peak in the expanded bead, the DSC curve illustrated in Fig. 2 can be referred to.

<Expanded beads molded article>

(Molded article density)

The density of three test pieces was calculated by dividing the mass of the expanded beads molded article by the volume calculated based on the dimensions of the molded article, and the density of the expanded beads molded article was determined as their arithmetic average value.

(50% compression stress)

The 50% compression stress of the expanded beads molded article was determined as follows. Using a molding machine including a mold having a molding cavity of 300 mm long × 250 mm wide × 60 mm thick, in-mold molding of the expanded beads shown in Table 2 or 3 was carried out to obtain an expanded beads molded article. By removing the skin layer from the obtained expanded beads molded article, a test piece was cut out to be in a rectangular form of 50 mm long × 50 mm wide × 25 mm thick. For this test piece, the load at the time of 50% strain when compressed at a rate of 10 mm/min using RTF-1350 manufacture by A&D Co., Ltd. in accordance with JIS K 6767:1999 was determined, and by dividing this by the pressure reception area of the test piece, the 50% compression stress [kPa] was calculated.

[Evaluation methods]

<Molding pressure range which enables molding (moldability)>

The moldability of the expanded bead was evaluated as follows. Expanded beads molded articles were prepared at molding pressures (steam pressures) varying by 0.01 MPa (G) in <Preparation of expanded beads molded article> described later, and the range of the molding pressure at which an expanded beads molded article could be obtained that passed all of the following evaluations for the expanded beads molded article: fusion bonding properties, appearance, and recovery properties, was defined as the molding pressure range which enables molding. Note that, since the molding temperature is adjusted depending on the molding pressure, a wider range from the lower limit value to the upper limit value of the molding pressure which enables molding means a wider molding heating temperature range which enables molding.

(Fusion bonding properties)

The fusion bonding properties of the expanded beads molded article was evaluated by the following method. At first, among the side walls of the expanded beads molded article in the shape of a container, which will be described later, that rise up from the bottom of the expanded beads molded article, the side walls in the lateral direction of the expanded beads molded article were cut out. Next, the side walls were bent and broken, the number (C1) of expanded beads present on the broken surface and the number (C2) of broken expanded beads were determined, and the ratio of the broken expanded beads to the above expanded beads (C2/C1 × 100) was calculated as the material breakage rate. A material breakage rate of 80% or more was considered to be a pass.

(Appearance (degree of gaps))

On the central part of the outer surface of a side wall in the lateral direction of the expanded beads molded article, a rectangle of 100 mm × 100 mm was drawn, diagonal lines were drawn from the corners of the rectangular area, and the number of voids (gaps) with a size of 1 mm × 1 mm or larger on these lines was counted. The case where the number of voids was less than 5 was considered to be a pass.

(Recovery properties)

The thicknesses of the central part and the four corner parts of a side wall in the lateral direction of the expanded beads molded article were each measured, and the ratio of the thickness of the central part to the thickest part among the four corner parts was calculated. The case where the thickness ratio was 95% or more was considered to be a pass.

<Range of molding pressure at which resin deposition on mold can be suppressed when in-mold molding is repeatedly carried out>

In the evaluation of the above <Molding pressure range which enables molding (moldability)>, 30 cycles of in-mold molding of the expanded beads were continuously carried out using the same mold and under the same molding conditions in the molding pressure range which enables molding. Visual observation was made to determine whether or not the resin was deposited on the mold after the completion of molding, and evaluation was made according to the following criteria. The molding pressure range in which the evaluation was A was defined as the range of molding pressure at which resin deposition on the mold can be suppressed.

    A: No resin deposition was observed.
    B: Partial resin deposition was observed.

[Raw materials]

The polypropylene-based resins used in Examples and Comparative Examples are listed in Table 1.

Table 1

| | Monomer component | | | DSC characteristics | | | | Flexural modulus |
| | Ethylene component content | Butene component content | Butene component content/ ethylene component content | Peak shape | Peak top temperature of melting peak | Total heat of fusion $\Delta h$ | Crystallization temperature Tc | |
| | % by mass | % by mass | - | - | °C | J/g | °C | MPa |
| PP1 | 3.8 | 4.5 | 12 | Double | 122,134 | 56 | 101 | 770 |
| PP2 | 3.0 | 9.4 | 3.1 | Single | 134 | 60 | 97 | 830 |
| PP3 | 2.4 | 7.3 | 3.0 | Single | 132 | 60 | 90 | 740 |
| PP4 | 4.6 | 3.8 | 0.8 | Single | 130 | 50 | 87 | 700 |
| PP5 | 2.4 | - | - | Single | 142 | 70 | 100 | 980 |
| PP6 | 3.7 | - | - | Single | 137 | 71 | 95 | 880 |

Examples 1 to 6 and Comparative Examples 1 to 5

<Preparation of resin beads>

A production device was provided that includes an extruder for core layer formation with an inner diameter of 50 mm, a die for multi-layered strand formation annexed on the downstream side of the extruder for core layer formation, and an extruder for covering layer formation with an inner diameter of 30 mm. Note that, in the production device, the downstream side of the extruder for covering layer formation and the die for multi-layered strand formation are connected. Also, the production device was designed to have a structure that enables stacking of the resin molten product for forming each layer in the die, as well as coextrusion.

The propylene-ethylene random copolymer listed in Table 2 or 3 as the base material resin constituting the core layer, zinc borate as the cell adjusting agent (0.1 parts by mass based on 100 parts by mass of the core layer forming materials), and carbon black (specifically, furnace black, 2.7 parts by mass based on 100 parts by mass of the core layer forming materials) were supplied to the extruder for core layer formation, and melt-kneaded. The propylene-ethylene-butene random copolymer listed in Table 2 or 3 as the base material resin constituting the covering layer, the higher fatty acid amide (specifically, erucic acid amide, trade name "FATTY AMIDE E" manufactured by Kao Corporation), and carbon black (specifically, furnace black, 2.7 parts by mass based on 100 parts by mass of the covering layer forming materials) were supplied to the extruder for covering layer formation, and melt-kneaded. Note that the higher fatty acid amide was supplied so that the content of the higher fatty acid amide was the content listed in Table 2 or 3 when the covering layer was 100% by mass. The respective resin molten products for layer formation obtained by the melt-kneading were introduced into the die for multi-layered strand formation and merged in the die to extrude a multi-layered strand having a two-layer structure (core layer/covering layer structure, core layer: covering layer = 97:3). The extruded strand was cooled in water and cut with a pelletizer to obtain resin particles with an average mass per particle of 1 mg.

<Preparation of expanded bead>

1 kg of the obtained resin particles were supplied into a sealable vessel with an inner capacity of 5 L, together with 3 L of water as the dispersing medium. Also, based on 100 parts by mass of the resin particle, 0.3 parts by mass of kaolin as the inorganic dispersant and 0.2 parts by mass of the surfactant (sodium dodecylbenzenesulfonate, manufactured by DKS Co. Ltd., trade name "NEOGEN") (as the active ingredient) were each added into the sealable vessel. Next, carbon dioxide was put under pressure as the blowing agent into the sealable vessel, and pressurized until the gauge pressure reached 2.0 MPa (G). Thereafter, while stirring the inside of the sealable vessel, it was heated at a heating rate of 2°C/min until the temperature reached 149.5°C, and held at the same temperature for 15 minutes. By doing so, adjustment was made so that a high-temperature peak appears in the endothermic curve of the resulting expanded beads as measured by DSC.

Thereafter, the contents of the sealable vessel (the resin particles and water) were released into atmospheric pressure to obtain expanded beads with a bulk density of 60 kg/m$^3$ (one-stage expanded bead). Note that the same steps as the steps described above were repeated for several cycles to obtain the expanded beads to be subjected to the evaluations described above.

The one-stage expanded beads obtained as described above was allowed to recuperate by leaving it in an environment with a temperature of 23°C, a relative humidity of 50%, and 1 atm for 24 hours. Then, the one-stage expanded beads after the recuperation were filled into a pressurizable sealable vessel, and the pressure in the sealable vessel was raised from ambient pressure to pressurize the expanded beads. By maintaining the expanded beads in a pressurized state for a predetermined time, cells of the expanded beads were impregnated with air. Thereafter, the one-stage expanded beads were removed from the sealable vessel to obtain one-stage expanded beads in which the internal pressure of cells of the expanded beads was 0.5 MPa (G). Then, the one-stage expanded beads were supplied to a two-stage expanding device for two-stage expansion. Steam was supplied to the device to expand the one-stage expanded beads to obtain expanded beads with the bulk density listed in Table 2 or 3. The measurement results of the heat of fusion ΔH2 of the high-temperature peak and the total heat of fusion ΔH of the expanded beads obtained by the two-stage expansion are shown in Table 2 or 3. Note that the mass ratio between the core layer and the covering layer in the expanded bead was core layer: covering layer = 97:3.

<Production of expanded beads molded article>

The obtained expanded beads were filled into a pressurizable sealable vessel, and the pressure in the sealable vessel was raised from ambient pressure to pressurize the expanded beads. By maintaining the expanded beads in a pressurized state for a predetermined time, cells of the expanded beads were impregnated with air. Thereafter, the expanded beads were removed from the sealable vessel to obtain expanded beads in which the internal pressure of cells of the expanded beads was 0.1 MPa (G). These expanded beads were filled into a mold for molding (mold) having a molding cavity capable of molding a molded article in the shape of a container, and in-mold molding was carried out by the following heating method. Note that the above molded article in the shape of a container has a shape in which the external dimensions are 240 mm long × 190 mm wide × 110 mm high, the thickness of the side walls in the longitudinal direction of the molded article is 20 mm, the thickness of the side walls in the lateral direction is 30 mm, the thickness of the bottom wall is 10 mm, and when the bottom wall side is regarded as the bottom surface, the upper side of the molded article in the height direction is open. The above mold for molding was also provided with multiple core vents with a diameter of 1 cm at a predetermined interval, each with five slits (vent holes) with a width of 0.4 mm. As a result of this, the above mold for molding had a structure that allowed molding steam to be introduced into the molding space through the above slits.

At first, pre-heating (exhaust step) was carried out by supplying steam to the mold in the state where drain valves provided on both sides of the mold were open. Thereafter, steam was supplied from one side of the mold for heating, and then steam was supplied from the other side of the mold for further heating. Subsequently, the mold was heated by supplying steam from both sides of the mold at the predetermined molding heating steam pressure (main heating). After the completion of the main heating, the pressure was released and cooling with water was performed until the surface pressure due to the expanding force of the expanded beads molded article reached 0.04 MPa (G), and then the mold was opened to remove the expanded beads molded article. The obtained expanded beads molded article was allowed to recuperate in an oven at 80°C for 12 hours, and then slowly cooled to room temperature to obtain an expanded beads molded article in the shape of a container as described above.

Table 2

| | | | | Example | | | | | |
|---|---|---|---|---|---|---|---|---|---|
| | | | | 1 | 2 | 3 | 4 | 5 | 6 |
| Expanded bead(s) | Covering layer | Type of resin | - | PP1 | PP2 | PP1 | PP2 | PP1 | PP1 |
| | | Peak shape | - | Double | Single | Double | Single | Double | Double |
| | | Melting point $Tm_b$ | °C | 122 | 134 | 122 | 134 | 122 | 122 |
| | | Peak top temperature $Tm_{b2}$ of second melting peak | °C | 134 | - | 134 | - | 134 | 134 |
| | | Crystallization temperature $Tc_b$ | °C | 101 | 97 | 101 | 97 | 101 | 101 |
| | | $Tm_b$-$Tc_b$ | °C | 21 | 37 | 21 | 37 | 21 | 21 |
| | | $Tm_{b2}$-$Tc_b$ | °C | 33 | - | 33 | - | 33 | 33 |
| | | Heat of fusion $\Delta h_{b1}$ of first melting peak | J/g | 45 | | 45 | | 45 | 45 |
| | | Heat of fusion $\Delta h_{b2}$ of second melting peak | J/g | 12 | | 12 | | 12 | 12 |
| | | $Tm_{b2}$-$Tm_{b1}$ | °C | 12 | | 12 | | 12 | 12 |
| | | $\Delta h_{b2}/\Delta h_b$ | - | 0.21 | | 0.21 | | 0.21 | 0.21 |
| | | Higher fatty acid amide (content) | % by mass | 0.3 | 0.3 | 0.3 | 0.3 | 0.3 | 0.5 |
| | Core layer | Type of resin | - | PP5 | PP5 | PP6 | PP6 | PP5 | PP5 |
| | | Melting point $Tm_a$ | °C | 142 | 142 | 137 | 137 | 142 | 142 |
| | | Crystallization temperature $Tc_a$ | °C | 100 | 100 | 95 | 95 | 100 | 100 |
| | $Tc_a$-$Tc_b$ | | °C | -1 | 3 | -6 | -2 | -1 | -1 |
| | $Tm_a$-$Tm_b$ | | °C | 20 | 8 | 15 | 3 | 20 | 20 |
| | $Tm_a$-$Tm_{b2}$ | | °C | 8 | - | 8 | - | 8 | 8 |

(continued)

| | | | Example | | | | | |
|---|---|---|---|---|---|---|---|---|
| | | | 1 | 2 | 3 | 4 | 5 | 6 |
| Expanded beads molded article | Bulk density | kg/m$^3$ | 26 | 25 | 26 | 25 | 18 | 25 |
| | Heat of fusion $\Delta$H2 of high-temperature peak | J/g | 15 | 15 | 14 | 15 | 15 | 15 |
| | Total heat of fusion $\Delta$h | J/g | 65 | 64 | 63 | 62 | 65 | 64 |
| | Molded article density | kg/m$^3$ | 30 | 30 | 30 | 29 | 21 | 30 |
| | 50% compression stress | kPa | 235 | 235 | 225 | 220 | 165 | 230 |
| Evaluation | Moldable range | MPa (G) | 0.26-0.30 | 0.26-0.30 | 0.24-0.28 | 0.24-0.28 | 0.26-0.30 | 0.26-0.30 |
| | Range of molding conditions under which resin deposition on mold is suppressed (after 30 cycles of molding) | MPa (G) | 0.26-0.30 | 0.26 | 0.24-0.28 | 0.24-0.26 | 0.26-0.30 | 0.26-0.30 |

Table 3

| | | | | Comparative Example | | | | |
|---|---|---|---|---|---|---|---|---|
| | | | | 1 | 2 | 3 | 4 | 5 |
| Expanded bead(s) | Covering layer | Type of resin | - | PP3 | PP4 | PP3 | PP4 | PP1 |
| | | Peak shape | | Single | Single | Single | Single | Double |
| | | Melting point $Tm_b$ | °C | 132 | 130 | 132 | 130 | 122 |
| | | Peak top temperature $Tm_{b2}$ of second melting peak | | - | - | - | - | 134 |
| | | Crystallization temperature $Tc_b$ | °C | 90 | 87 | 90 | 87 | 101 |
| | | $Tm_b$-$Tc_b$ | °C | 42 | 43 | 42 | 43 | 21 |
| | | $Tm_{b2}$-$Tc_b$ | | - | - | - | - | 33 |
| | | Heat of fusion $\Delta h_{b1}$ of first melting peak | J/g | - | - | - | - | 45 |
| | | Heat of fusion $\Delta h_{b2}$ of second melting peak | J/g | | | | | 12 |
| | | $Tm_{b2}$-$Tm_{b1}$ | °C | | | | | 12 |
| | | $\Delta h_{b2}$/$\Delta h_b$ | - | | | | | 0.21 |
| | | Higher fatty acid amide (content) | % by mass | 0.3 | 0.3 | 0.3 | 0.3 | 0 |
| | Core layer | Type of resin | - | PP5 | PP5 | PP6 | PP6 | PP5 |
| | | Melting point $Tm_a$ | °C | 142 | 142 | 137 | 137 | 142 |
| | | Crystallization temperature $Tc_a$ | °C | 100 | 100 | 95 | 95 | 100 |
| | $Tc_a$-$Tc_b$ | | °C | 10 | 13 | 5 | 8 | -1 |
| | $Tm_a$-$Tm_b$ | | °C | 10 | 12 | 5 | 7 | 20 |
| | $Tm_a$-$Tm_{b2}$ | | °C | - | - | - | - | 8 |
| | Bulk density | | kg/m³ | 25 | 26 | 25 | 26 | 25 |
| | Heat of fusion $\Delta$H2 of high-temperature peak | | J/g | 15 | 15 | 15 | 14 | 15 |
| | Total heat of fusion $\Delta h$ | | J/g | 66 | 66 | 61 | 62 | 65 |
| Expanded beads molded article | Molded article density | | kg/m³ | 30 | 30 | 30 | 30 | 30 |
| | 50% compression stress | | kPa | 235 | 240 | 220 | 225 | 235 |

(continued)

| | | | Comparative Example | | | | |
|---|---|---|---|---|---|---|---|
| | | | 1 | 2 | 3 | 4 | 5 |
| Evaluation | Moldable range | MPa(G) | 0.26-0.30 | 0.26-0.30 | 0.24-0.28 | 0.24-0.28 | 0.26-0.30 |
| | Range of molding conditions under which resin deposition on mold is suppressed (after 30 cycles of molding) | MPa(G) | None | None | None | None | None |

As can be seen from Table 2, according to the expanded beads of the present invention, in-mold molding at a low molding pressure such as 0.24 MPa (G) or 0.26 MPa (G) is possible, the molding pressure range which enables molding is wide, and the range of molding pressure at which resin deposition on the mold is suppressed when in-mold molding is repeatedly carried out is also wide. Therefore, according to the expanded bead of the present invention, the frequency of mold cleaning or other operations can be reduced even in the case where production of the molded article is carried out over a long period of time, thereby improving the production efficiency of the expanded beads molded article while maintaining the in-mold moldability of the expanded beads.

As can be seen from Table 3, Comparative Examples 1 to 4, in which the difference $[Tm_b - Tc_b]$ between the melting point $Tm_b$ of the polypropylene-based resin (b) and the crystallization temperature $Tc_b$ of the polypropylene-based resin (b) is too large, failed to suppress resin deposition on the mold when in-mold molding was repeatedly carried out. Specifically, resin deposition on the mold was observed at the stage of approximately the 10th cycle of in-mold molding. Note that resin deposition was often observed on the molding surface of the side walls in the longitudinal direction of the molded article, and near the vent holes of the mold for molding in the part corresponding to the molding surface of the bottom wall. Also, Comparative Example 5, in which no higher fatty acid amide was added to the covering layer, similarly failed to suppress resin deposition on the mold when in-mold molding was repeatedly carried out.

## Claims

1. A polypropylene-based resin expanded bead comprising: a core layer in an expanded state comprising a polypropylene-based resin (a) as a base material resin; and a covering layer comprising a polypropylene-based resin (b) as a base material resin, the covering layer covering the core layer, wherein

   the polypropylene-based resin (a) has a melting point $Tm_a$ of 135°C or higher and 155°C or lower,
   the polypropylene-based resin (b) contains a propylene-based copolymer containing a propylene component, an ethylene component, and a butene component, as a main component,
   a difference $[Tm_a - Tm_b]$ between the melting point $Tm_a$ of the polypropylene-based resin (a) and a melting point $Tm_b$ of the polypropylene-based resin (b) is 1°C or more and 30°C or less,
   a difference $[Tm_b - Tc_b]$ between the melting point $Tm_b$ of the polypropylene-based resin (b) and a crystallization temperature $Tc_b$ of the polypropylene-based resin (b) is 40°C or less, and
   the covering layer contains a higher fatty acid amide.

2. The polypropylene-based resin expanded bead according to claim 1, wherein the crystallization temperature $Tc_b$ of the polypropylene-based resin (b) is 95°C or higher and 110°C or lower.

3. The polypropylene-based resin expanded bead according to claim 1 or 2, wherein a content of the higher fatty acid amide in the covering layer is 0.02% by mass or more and 2% by mass or less.

4. The polypropylene-based resin expanded bead according to claim 1 or 2, wherein a content of the higher fatty acid amide in the covering layer is 0.2% by mass or more and 2% by mass or less.

5. The polypropylene-based resin expanded bead according to any one of claims 1 to 4, wherein the higher fatty acid amide contains erucic acid amide.

6. The polypropylene-based resin expanded bead according to any one of claims 1 to 5, wherein a difference $[Tc_a - Tc_b]$ between a crystallization temperature $Tc_a$ of the polypropylene-based resin (a) and the crystallization temperature $Tc_b$ of the polypropylene-based resin (b) is -10°C or more and 3°C or less.

[Fig. 1]

Temperature (°C)

[Fig. 2]

Temperature (°C)

**EP 4 417 643 A1**

## INTERNATIONAL SEARCH REPORT

| International application No. |
|---|
| **PCT/JP2022/037641** |

### A. CLASSIFICATION OF SUBJECT MATTER

*C08J 9/16*(2006.01)i; *C08F 110/06*(2006.01)i
FI:    C08J9/16 CES; C08F110/06

According to International Patent Classification (IPC) or to both national classification and IPC

### B. FIELDS SEARCHED

Minimum documentation searched (classification system followed by classification symbols)

C08J9/00-9/42; B29C44/00-44/60; B29C67/20; C08F110/06

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 6757871 B1 (JSP CORP.) 23 September 2020 (2020-09-23)<br>examples 1-3, paragraph [0065] | 1-6 |
| Y | JP 2005-325179 A (JSP CORP.) 24 November 2005 (2005-11-24)<br>paragraph [0075] | 1-6 |
| Y | JP 2008-255286 A (KANEKA CORP.) 23 October 2008 (2008-10-23)<br>claim 1, paragraphs [0002]-[0004], [0018] | 1-6 |
| Y | JP 2015-189880 A (JAPAN POLYPROPYLENE CORP.) 02 November 2015 (2015-11-02)<br>paragraph [0042] | 1-6 |
| A | JP 2003-253103 A (MITSUBISHI ENGINEERING PLASTICS CORP.) 10 September 2003<br>(2003-09-10)<br>paragraph [0006] | 1-6 |

☐ Further documents are listed in the continuation of Box C.        ☑ See patent family annex.

| | |
|---|---|
| *       Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **12 December 2022** | **20 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

International application No.

**PCT/JP2022/037641**

| Patent document cited in search report | | | Publication date (day/month/year) | Patent family member(s) | | | Publication date (day/month/year) |
|---|---|---|---|---|---|---|---|
| JP | 6757871 | B1 | 23 September 2020 | EP | 3943533 | A1 | |
| | | | | examples 1-3, paragraphs [0097]-[0099] | | | |
| | | | | WO | 2020/189389 | A1 | |
| | | | | TW | 202045605 | A | |
| JP | 2005-325179 | A | 24 November 2005 | (Family: none) | | | |
| JP | 2008-255286 | A | 23 October 2008 | (Family: none) | | | |
| JP | 2015-189880 | A | 02 November 2015 | (Family: none) | | | |
| JP | 2003-253103 | A | 10 September 2003 | US | 2003/0069339 | A1 | |
| | | | | paragraph [0070] | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011016914 A
- JP S5122951 A
- JP H446217 A
- JP H649795 A
- JP H622919 A

**Non-patent literature cited in the description**

- Polymer Analysis Handbook. KINOKUNIYA COMPANY, LTD, January 1995, 615-616, 618-619